# FASCICULE DE BREVET EUROPEEN

(11) **EP 1 142 437 B1**
(45) Date de publication et mention de la délivrance du brevet: **22.12.2004**
(21) Numéro de dépôt: 99964519.5
(22) Date de dépôt: 24.11.1999
(51) Int. Cl.: H04Q 11/04

(54) **PROCEDE DE TELECOMMUNICATION ATM DANS LEQUEL DES TERMINAUX EMMETTENT VERS UNE MEME STATION**
VERFAHREN ZUR ATM-TELEKOMMUNIKATION WOBEI ENDGERÄTE MIT EINER STATION VERBUNDEN SIND
ATM TELECOMMUNICATION METHOD WHEREBY THE TERMINALS TRANSMIT TO A COMMON STATION

(30) Priorité: 26.11.1998 FR 9814880
(43) Date de publication de la demande: 10.10.2001
(73) Titulaire: ALCATEL, 75008 Paris (FR)
(72) Inventeur: SEHIER, Philippe, F-78100 Saint Germain en Laye (FR)
(74) Mandataire: Smith, Bradford Lee
(86) Numéro de dépôt international: PCT/EP1999/009474
(87) Numéro de publication internationale: WO 2000/032007

(56) Documents cités:
- WO-A-97/08861
- WO-A-97/34421
- US-A- 5 373 502

## Description

L'invention est relative à un procédé de transmission en mode asynchrone de données numériques composées de cellules, ou paquets, dans lequel des terminaux émettent des messages vers une station centrale, ou station de commande.

Elle concerne plus particulièrement, mais non exclusivement, un procédé de transmission pour un système dans lequel les communications sont relayées par l'intermédiaire d'équipements à bord d'un satellite mobile sur une orbite.

Pour tirer le meilleur parti d'un système de télécommunication, il est préférable de gérer les informations transmises de manière telle qu'à chaque instant on puisse transmettre un débit d'informations égal au débit maximum admissible par le système.

A cet effet, les informations sont transmises sous forme numérique pour limiter le bruit et faciliter la gestion. Le plus souvent, les informations numériques sont découpées en cellules (ou paquets) qui peuvent être transmises pendant un intervalle de temps donné - appelé intervalle de cellule - et ces cellules sont transmises selon une répartition temporelle qui permet d'optimiser l'utilisation du système. En d'autres termes, les cellules ne sont pas transmises de façon régulière, mais de façon appelée quelquefois en mode asynchrone ; on notera cependant que cette dénomination ne limite pas l'invention à la norme ATM.

Par ailleurs, pour maximiser les capacités en communication, on peut affecter à chaque cellule (ou paquet) une fréquence porteuse et/ou un code choisis parmi une multiplicité de tels fréquences et codes.

Il existe ainsi trois modes de répartition des ressources radio (ou ressources de communication) :
- La ressource AMRT : "Accès Multiple par Répartition en Temps" (TDMA en langue anglaise : "Time Division Multiple Access").
- La répartition AMRF : " Accès multiple par Répartition en Fréquence" (FDMA en langue anglaise).
- La répartition AMRC : "Accès Multiple à répartition en code" (CDMA en langue anglaise).

Affecter un code à un signal numérique consiste à étaler son spectre, c'est-à-dire à multiplier le signal par un code d'étalement. Pour permettre un décodage (désétalement) aisé et performant, on utilise des codes orthogonaux, c'est-à-dire tels que le produit d'un code par lui-même soit égal à 1 et que le produit de deux codes différents soit nul. Dans ces conditions, quand on transmet simultanément des signaux x₁, x₂, ...xᵢ, ...xₙ dont chacun est affecté d'un code, respectivement C₁, C₂, Cᵢ, Cₙ, pour extraire le signal xᵢ de la somme x₁C₁ + x₂C₂ +··· + xᵢCᵢ +··· + xₙCₙ, il suffit de multiplier la somme par Cᵢ.

Les documents US-5.373.502 et WO 97/34421 décrivent un procédé de transmission dans lequel des terminaux émettent des cellules vers une station, les terminaux émettant successivement selon des périodes séparées et à chaque cellule étant affectés au moins deux codes orthogonaux. Cette technique de transmission est connue sous la dénomination TD-CDMA.

Dans le cadre de la présente invention, on souhaite non seulement affecter à chaque cellule deux codes orthogonaux, mais également tenir compte des caractéristiques d'atténuation de propagation entre un terminal et la station réceptrice, et également de la puissance disponible au niveau de ce terminal.

A cet effet, selon l'invention, comme définie par les revendications 1 à 5, la durée de la période pendant laquelle chaque terminal émet, et/ou le nombre de codes affectés à chaque terminal, et/ou le nombre de symboles affectés d'un code déterminé dans un terminal sont sélectionnables à chaque émission, en fonction d'un niveau de puissance déterminé.

Avantageusement, un intervalle de garde est prévu entre la fin de l'émission par un terminal et le début de l'émission suivante par un autre terminal.

Dans un mode de mise en oeuvre avantageux, lorsqu'un terminal émet pendant une période de temps donnée, cette période est ininterrompue. Ceci permet d'éviter de gaspiller un temps de garde qui n'est pas nécessaire dans le cas où un même terminal émet plusieurs paquets consécutifs.

Préférentiellement, la durée de la période d'émission de chaque terminal et/ou le nombre de codes affectés à ce terminal sont choisis en fonction de sa position par rapport à la station. La position du terminal par rapport à la station est en effet un critère représentatif des caractéristiques du bilan de liaison entre le terminal et la station (lequel dépend de la position du terminal, mais aussi de la position du satellite et de l'atténuation de propagation (présence de pluies ou non)).

D'autres caractéristiques et avantages de l'invention apparaîtront avec la description de certains de ses modes de réalisation, celle-ci étant effectuée en se référant aux dessins ci-annexés sur lesquels :
la figure 1 représente un système de télécommunication auquel s'applique l'invention,
la figure 2 est un schéma servant à illustrer un procédé étudié dans le cadre de l'invention mais qui n'a pas été retenu, et
les figures 3 à 6 sont des schémas servant à expliquer plusieurs aspects du procédé conforme à l'invention.

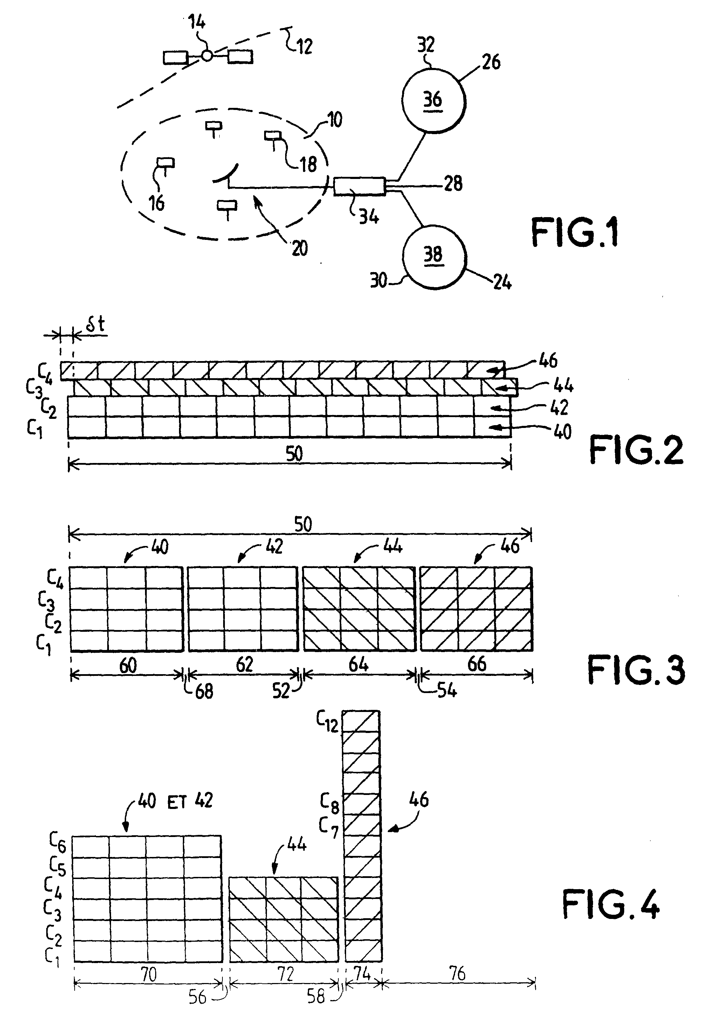

Le procédé selon l'invention que l'on va décrire en relation avec les figures se rapporte à un système de télécommunication dans lequel la surface du globe terrestre est divisée en zones 10 (figure 1) dont une seule a été représentée sur la figure. Dans chaque zone on trouve, d'une part, une station centrale de commande ou de connexion 20, et, d'autre part, des terminaux ou postes d'abonnés 16, 18, etc.

Les terminaux 16, 18, etc. communiquent entre eux par l'intermédiaire d'un satellite 14 à orbite basse ou moyenne. Dans l'exemple, l'altitude du satellite est d'environ 1 500 km. Ce satellite 14 se déplace sur une orbite 12 sur laquelle se trouvent d'autres satellites. Pour couvrir le globe terrestre, ou une grande partie de ce dernier, on prévoit plusieurs orbites 12.

Quand le satellite 14 perd de vue la zone 10, le satellite suivant (non montré), par exemple sur la même orbite 12, prend le relais de la communication.

La station de commande et de connexion 20 assure la gestion des communications entre les terminaux 16, 18, etc. En particulier, elle attribue des ressources en fréquences, en puissance et en codes pour chacun des terminaux. A cet effet, cette station 20 communique avec chacun des terminaux, également par l'intermédiaire du satellite 14.

Les communications entre terminaux s'effectuent par l'intermédiaire de la station 20. Autrement dit, quand le terminal 16 communique avec le terminal 18, le terminal 16 envoie les données à la station 20 par l'intermédiaire du satellite et la station 20 réémet ces données vers le terminal 18, également par l'intermédiaire du satellite.

La station 20 est reliée à un réseau terrestre, du type ATM dans l'exemple. Ainsi, cette station 20 est reliée, par l'intermédiaire d'un commutateur ATM 34, à un réseau large bande 36, à un réseau à bande étroite 38, ainsi qu'à des serveurs 28. Le réseau 38 à bande étroite permet la connexion d'utilisateurs 30 et de serveurs 24. De même, le réseau 36 à large bande permet la connexion d'utilisateurs 32 et de serveurs 26.

Un tel système de télécommunication du type à transmission asynchrone permet un débit important de données avec une grande capacité et un faible retard dû à la transmission.

Dans un réseau asynchrone, notamment du type ATM, les données sont sous forme numérique et organisées en paquets ou cellules comprenant, pour la norme ATM, 384 bits (ou symboles) de données et 40 bits (ou symboles) d'en-tête.

A chaque cellule, en plus des symboles ATM, on affecte douze ou seize symboles supplémentaires appelés symboles de référence qui servent principalement à la synchronisation en phase et en fréquence.

Au cours d'études effectuées dans le cadre de l'invention, on a étudié la possibilité d'utiliser le mode de transmission AOCDMA pour émettre des messages depuis les terminaux 16, 18, etc. vers la station 20.

AOCDMA signifie "Asynchronous Orthogonal Code Division Multiple Access". En bref, comme représenté sur la figure 2, ce procédé consiste à émettre simultanément des cellules affectées de codes différents, une cellule n'étant affectée que d'un seul code. Dans l'exemple représenté sur la figure 2, l'intervalle de cellule est de 6 millisecondes. Le terminal 16 émet deux cellules, respectivement 40 et 42, comprenant chacune 424 symboles ou bits. A la cellule 40 est affecté le code C₁ et à la cellule 42 est affecté le code C₂.

Le terminal 18 émet simultanément une cellule 44 affectée du code C₃ et, en même temps, un autre terminal émet une cellule 46 affectée du code C₄.

Les cellules 40, 42, 44 et 46 ont été représentées telles qu'elles apparaissent à la station 20. On voit ainsi que les cellules provenant de terminaux différents arrivent à la station 20 avec des décalages temporels qui peuvent être gênants. Ainsi, sur la figure 2 on a noté δt le décalage temporel entre l'instant d'arrivée de la cellule 46 et l'instant d'arrivée de la cellule 44.

Ce défaut de synchronisme entre les cellules entraîne un défaut d'orthogonalité, ce qui a pour conséquence que les intercorrélations entre C₁C₃, C₁C₄, C₂C₃, C₂C₄ et C₃C₄ ne sont pas strictement nulles ; il en résulte un bruit d'interférence supplémentaire lors du désétalement qui sera ici appelé quelquefois "décodage". Par contre, comme les cellules 40 et 42 proviennent du même terminal 16, elles sont parfaitement synchronisées lorsqu'elles sont reçues par la station 20 et n'interfèrent donc pas.

Pour surmonter la difficulté liée au défaut de synchronisme, on divise l'intervalle de cellule 50 en sous-intervalles (Figures 3 et 4), dont chacun est affecté à un seul terminal. Autrement dit, les émissions des divers terminaux sont séparées dans le temps, ce qui évite les défauts de synchronisation entre cellules transmises simultanément et affectées de codes différents. Cependant, avec l'invention, on garde toujours l'avantage lié à l'utilisation des codes qui est de permettre le réglage de l'efficacité spectrale de la modulation afin de maximiser les ressources en communication du système.

Les communications émises par chaque terminal ayant une durée sensiblement inférieure à un intervalle de cellule, à chaque cellule on affecte plusieurs codes. Mais, comme ces codes sont émis par le même terminal, ils ne présentent pas de défaut de synchronisation à la réception.

Pour éviter les risques de collisions entre cellules à la réception, il est préférable de prévoir un intervalle de garde 52, 54 (figure 3), 56, 58 (figure 4) entre les sous-intervalles correspondant à des terminaux différents.

Dans l'exemple simplifié représenté sur la figure 3, un intervalle de cellule 50 est divisé en autant de sous-intervalles qu'il existe de cellules à transmettre. Ces sous-intervalles 60, 62, 64 et 66 ont des durées égales et le même nombre de codes est affecté à chaque sous-intervalle. Ainsi, dans cet exemple, on prévoit quatre codes C₁, C₂, C₃ et C₄.

Les sous-intervalles 60, 62, 64 et 66 sont affectés respectivement aux cellules 40, 42, 44 et 46.

L'intervalle de garde 52 sépare les intervalles 62 et 64 et l'intervalle de garde 54 sépare les intervalles 64 et 66 affectés à des terminaux différents. On prévoit aussi un intervalle 68 séparant les sous-intervalles 60 et 62. Cet intervalle 68 est prévu pour simplifier la gestion et les commandes, mais il n'est pas indispensable car les cellules 40 et 42 sont émises par le même terminal.

Dans la réalisation (également simplifiée) représentée sur la figure 4, les longueurs des sous-intervalles diffèrent d'un terminal à l'autre. Ainsi, le sous-intervalle 70 affecté au terminal 16, et donc aux cellules 40 et 42, présente une longueur supérieure à la longueur du sous-intervalle 72 affecté au terminal 18, et donc à la cellule 44 ; le sous-intervalle 74 affecté au troisième terminal, c'est-à-dire à la cellule 46, présente une longueur trois fois plus faible que la longueur du sous-intervalle 72. L'intervalle de garde 56 sépare les sous-intervalles 70 et 72 et l'intervalle de garde 58 sépare les sous-intervalles 72 et 74. En outre, l'ensemble des sous-intervalles 70, 72 et 74 et des intervalles de garde 56, 58 n'occupe pas complètement l'intervalle de cellule 50, un sous-intervalle 76 restant disponible pour d'autres communications.

On notera aussi que, dans l'exemple de la figure 4, le nombre de codes diffère d'un sous-intervalle à un autre. Ainsi, au sous-intervalle 70 on affecte six codes, C₁ à C₆, au sous-intervalle 72 on affecte les quatre premiers codes C₁ à C₄ et au sous-intervalle 74, on affecte douze codes, C₁ à C₁₂.

Les durées des intervalles 60, 62, 64, 66 (figure 3) ou 70, 72, 74 (figure 4) sont choisies de façon à satisfaire deux contraintes contradictoires, à savoir : d'une part, ils doivent être aussi faibles que possible afin de maximiser la capacité en communication, et, d'autre part, la puissance de crête ne doit pas dépasser une valeur limite imposée par la puissance disponible dans le terminal, ou imposée par d'autres conditions telles qu'éviter de perturber d'autres systèmes (par exemple à satellite géostationnaire) ou les zones adjacentes qui peuvent utiliser les mêmes ressources ; la puissance limite peut aussi dépendre de l'emplacement du terminal dans la zone 10.

Le procédé correspondant à la figure 3 présente l'avantage d'une grande simplicité et simplifie la commande en raison de la répartition régulière des sous-intervalles de temps. En particulier, il n'est pas nécessaire que le récepteur à la station 20 mette à jour la composition de l'intervalle de cellule puisque cette composition est invariable.

Toutefois, cette solution ne permet pas de maximiser la capacité de transmission, d'une part, du fait de la présence du temps de garde 68, et d'autre part, parce que les sous-intervalles de temps ne peuvent (contrairement au procédé montré sur la figure 4) s'adapter aux caractéristiques des terminaux. Par "caractéristiques" des terminaux on entend, notamment, la puissance d'émission, la localisation à l'intérieur de la zone 10 et les possibilités d'attribution de codes.

Pour mettre en oeuvre le procédé représenté sur la figure 4, il faut une commande ou gestion dans les modems du système qui est plus complexe que pour la mise en oeuvre du procédé représenté sur la figure 3. Mais ce procédé présente l'avantage de permettre de maximiser l'efficacité, notamment parce que des terminaux présentant des caractéristiques différentes peuvent émettre sur le même intervalle de cellule, sans, pour cela, réduire la capacité.

Ainsi, dans le cas de la figure 4, le sous-intervalle 70 correspond, par exemple, à l'émission d'un terminal d'un abonné de type domestique présentant une capacité limitée à six codes mais qui peut utiliser sa pleine capacité car il se trouve au voisinage du centre de la zone 10. Dans cet exemple, le sous-intervalle 72 est affecté à un terminal pour un abonné qui est aussi du type domestique. Mais ce dernier se trouve au voisinage du bord de la zone 10, ce qui limite sa capacité d'utilisation à quatre codes. En effet, si le terminal devait émettre davantage de codes, il faudrait une puissance qui serait supérieure à la limite admissible. Enfin, la cellule 46 est émise par un terminal de type professionnel disposant d'une capacité (douze) en codes supérieure à la capacité d'un terminal de type domestique.

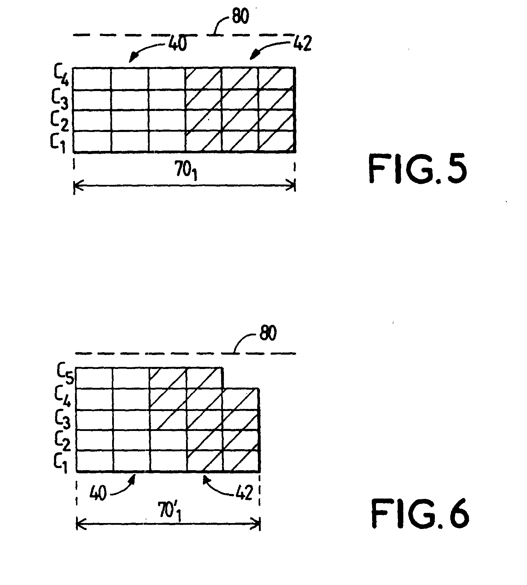

On se rapporte maintenant aux figures 5 et 6 qui illustrent deux possibilités d'assemblage des divers symboles de deux cellules qui sont émises par le même terminal. Ces schémas sont, bien entendu, comme ceux des figures 2 à 4, des représentations simplifiées.

Dans l'exemple représenté sur la figure 5, le sous-intervalle de temps 70₁ est séparé en deux parties égales, sans temps de garde, la première partie étant affectée à la cellule 40 et la seconde partie à la cellule 42. Le même nombre de codes (quatre dans l'exemple) est affecté à ces cellules 40 et 42.

En variante (non montrée), chaque cellule s'étend sur l'ensemble du sous-intervalle de temps 70₁ mais les codes sont partagés entre les cellules, par exemple les codes C₁ et C₂ sont affectés à la cellule 40 et les codes C₃ et C₄ à la cellule 42.

Dans l'exemple représenté sur la figure 6, le nombre de codes (cinq) qui est attribué au terminal pendant le sous-intervalle 70 est choisi à sa valeur maximale, cette dernière étant limitée par le fait que la puissance émise ne doit pas dépasser une limite 80.

Cette limite est fonction des caractéristiques d'atténuation de propagation entre le terminal et la station, et du niveau de puissance disponible au niveau de ce terminal.

En outre, on utilise seulement une partie du sous-intervalle 70₁.

Pour chaque code, la séparation temporelle entre les cellules ne s'effectue pas au même instant. En particulier, on voit que pour les codes C₁ et C₂ la cellule 40 comporte trois symboles (on rappelle encore une fois qu'il s'agit ici d'un exemple simplifié) et la cellule 42 deux symboles. Pour les codes C₃ et C₄, la cellule 40 comporte deux symboles tandis que la cellule 42 comporte trois symboles.

Le code C₅ est utilisé pour un temps inférieur à l'utilisation des codes C₁ à C₄. On voit en effet que, pour le code C₅, il n'est prévu que quatre symboles. On peut noter aussi que pour ce code C₅ les deux premiers symboles sont affectés à la cellule 40 et les deux derniers à la cellule 42.

En variante (non montrée), la répartition des ressources s'effectue principalement en fonction des codes, par exemple les dix symboles des codes C₁ et C₂ ainsi que les deux premiers symboles du code C₃ sont affectés à la cellule 40, les autres symboles du code C₃ et des codes C₄ et C₅ étant utilisés pour la cellule 42.

Dans le cas de la figure 6, le sous-intervalle de temps 70'₁ est inférieur au sous-intervalle 70₁ de la figure 5, ce qui permet encore de maximiser l'efficacité du système.

Quand on transmet - comme décrit en relation avec la figure 6 - des cellules de façon imbriquée, par rapport au cas où les cellules sont émises les unes après les autres, on peut réduire le nombre de symboles de référence servant à la synchronisation en phase et en fréquence. En effet, on peut, pour la synchronisation, considérer l'ensemble imbriqué de plusieurs cellules comme constituant une seule cellule. Autrement dit, s'il faut, par exemple, 16 symboles de référence pour la synchronisation d'une cellule, on utilisera ce même nombre (16) de symboles si on transmet deux, trois ou davantage de cellules de façon imbriquée. La seule condition à respecter est de répartir uniformément les symboles dans le temps.

Le tableau ci-dessous fournit des exemples de répartition de sous-intervalles de temps pour des terminaux P de type professionnel et des terminaux D de type domestique. Dans ce tableau, p est la proportion de codes qu'il est possible d'utiliser parmi tous les codes disponibles.

**TABLEAU 1**

| | Nombre de codes disponibles | Nombre de symboles par code | Nombre de codes utilisés | Nombre de symboles par cellule |
|---|---|---|---|---|
| Terminaux P ρ = 1 | 40 | 11 | 40 | 440 |
| | 64 | 7 | 63 | 441 |
| | 128 | 4 | 110 | 440 |
| Terminaux D ρ = 14/40 | 40 | 32 | 14 | 448 |
| | 64 | 20 | 22 | 440 |
| | 128 | 10 | 44 | 440 |

Ce tableau correspond aux hypothèses suivantes :
Fréquence d'étalement ("chip" en langue anglaise) : 2 933 MHz.
Précision sur le temps d'arrivée à la station centrale : ± 6,8 µs.
Intervalle (50) de cellule : 6 ms + 13,6 µs.
Longueur de chaque cellule : 440 symboles (y compris les symboles de référence). Il est à noter que le nombre de symboles de référence peut encore être réduit car le procédé selon l'invention facilite la synchronisation.

Dans un exemple, un code supplémentaire est superposé à tous les signaux dans la même zone, ce qui permet de réduire le niveau d'interférence entre communications provenant de zones adjacentes, à condition, bien entendu, que les codes superposés soient différents d'une zone à une autre.

Bien que l'invention ait été décrite en relation avec un système de télécommunication par satellites, elle s'applique, de façon plus générale, quand des terminaux doivent émettre des messages vers une même station.

## Revendications

1. Procédé de transmission de signaux numériques en mode asynchrone dans lequel des terminaux (16, 18) émettent vers une même station (20), les communications étant transmises par cellules (40, 42, 44, 46) et lesdits terminaux émettant successivement selon des périodes séparées (60, 62, 64, 66 ; 70, 72, 74), à chaque cellule étant affectés au moins deux codes orthogonaux (C1, C2, C3, C4), **caractérisé en ce que** la durée de la période pendant laquelle chaque terminal émet, et/ou le nombre de codes affectés à chaque terminal, et/ou le nombre de symboles affectés d'un code déterminé dans un terminal sont sélectionnables à chaque émission, en fonction d'un niveau de puissance (80) déterminé.

2. Procédé selon la revendication 1, **caractérisé en ce qu'**un intervalle de garde (52, 54 ; 56, 58) est prévu entre la fin de l'émission par un terminal et le début de l'émission suivante par un autre terminal.

3. Procédé selon l'une des revendications 1 et 2, **caractérisé en ce que** lorsqu'un terminal émet pendant une période de temps donnée (70), cette période est ininterrompue.

4. Application du procédé selon l'une quelconque des revendications précédentes à un système de télécommunication dans lequel les terminaux (16, 18) communiquent avec la station (20) par l'intermédiaire d'un satellite, par exemple mobile.

5. Procédé selon la revendication 4, **caractérisé en ce que** la durée de la période d'émission de chaque terminal et/ou le nombre de codes affectés à ce terminal sont choisis en fonction de sa position par rapport à la station (20).

## Claims

1. An asynchronous transfer mode method of transmitting digital signals in which terminals (16, 18) send to the same station (20), calls are transmitted by cells (40, 42, 44, 46), said terminals send successively in separate periods (60, 62, 64, 66; 70, 72, 74), and each cell is assigned at least two orthogonal codes (C1, C2, C3, C4), **characterized in that** the duration of the period during which each terminal sends and/or the number of codes assigned to each terminal and/or the number of symbols assigned a particular code in a terminal can be selected on each sending as a function of a particular power level (80).

2. A method according to claim 1, **characterized in that** a guard interval (52, 54; 56, 58) is provided between the end of sending by one terminal and the start of the next sending by another terminal.

3. A method according to either claim 1 or claim 2, **characterized in that** if a terminal sends during a given time period (70), that period is uninterrupted.

4. The use of the method according to any preceding claim in a telecommunication system in which the terminals (16, 18) communicate with the station (20) via a satellite, for example a non-geosynchronous satellite.

5. A method according to claim 4, **characterized in that** the duration of the period of sending by each terminal and/or the number of codes assigned to that terminal are chosen as a function of its position relative to the station (20).

## Patentansprüche

1. Verfahren zur Übertragung digitaler Signale im asynchronen Modus, bei dem Endgeräte (16, 18) mit einer Station (20) verbunden sind, wobei die Verbindungen in Paketen (40, 42, 44, 46) übertragen werden und die Endgeräte nacheinander in getrennten Zeiträumen (60, 62, 64, 66; 70, 72, 74) senden, wobei jedem Paket mindestens zwei orthogonale Codes (C1, C2, C3, C4) zugewiesen sind, **dadurch gekennzeichnet, dass** der Zeitraum, während dessen jedes Endgerät sendet, und/oder die Anzahl der jedem Endgerät zugewiesenen Codes und/oder die Anzahl der Symbole, denen ein bestimmter Code in einem Endgerät zugewiesen ist, bei jedem Sendevorgang in Abhängigkeit von einem bestimmten Leistungspegel (80) wählbar sind.

2. Verfahren nach Anspruch 1, **dadurch gekennzeichnet, dass** zwischen dem Ende des Sendevorgangs durch ein Endgerät und dem Anfang des folgenden Sendevorgangs durch ein anderes Endgerät eine Wartezeit (52, 54; 56, 58) vorgesehen ist.

3. Verfahren nach einem der Ansprüche 1 und 2, **dadurch gekennzeichnet, dass** dann, wenn ein Endgerät während eines gegebenen Zeitraums (70) sendet, dieser Zeitraum unterbrechungsfrei ist.

4. Anwendung des Verfahrens nach einem beliebigen der vorhergehenden Ansprüche auf ein Telekommunikationssystem, bei dem die Endgeräte (16, 18) mit der Station (20) über einen Satelliten kommunizieren, der sich zum Beispiel auf einer Umlaufbahn bewegt.

5. Verfahren nach Anspruch 4, **dadurch gekennzeichnet, dass** die Dauer des Sendezeitraums jedes Endgeräts und/oder die Anzahl der diesem Endgerät zugewiesenen Codes in Abhängigkeit von seiner Position gegenüber der Station (20) gewählt werden.
